# EUROPÄISCHE PATENTSCHRIFT

(11) **EP 1 339 774 B1**
(45) Veröffentlichungstag und Bekanntmachung des Hinweises auf die Patenterteilung: **23.01.2008**
(21) Anmeldenummer: 01998579.5
(22) Anmeldetag: 19.11.2001
(51) Int. Cl.: C08G 63/85, B01J 31/22, B01J 31/38

(54) **TITAN-/ZIRKONIUM-KATALYSATOREN SOWIE DEREN VERWENDUNG ZUR HERSTELLUNG VON ESTERN ODER POLYESTERN**
TITANIUM/ZIRCONIUM CATALYSTS AND USE THEREOF FOR PRODUCTION OF ESTERS OR POLYESTERS
CATALYSEURS A BASE DE TITANE/ZIRCONIUM ET LEUR UTILISATION POUR PRODUIRE DES ESTERS OU DES POLYESTERS

(30) Priorität: 01.12.2000 DE 10059612
(43) Veröffentlichungstag der Anmeldung: 03.09.2003
(73) Patentinhaber: Bayer MaterialScience AG, 51368 Leverkusen (DE)
(72) Erfinder: HOFFMANN, Andreas, 50733 Köln (DE); NEFZGER, Hartmut, 50259 Pulheim (DE); BAUER, Erika, 41363 Jüchen (DE)
(86) Internationale Anmeldenummer: PCT/EP2001/013341
(87) Internationale Veröffentlichungsnummer: WO 2002/044243

(56) Entgegenhaltungen:
- EP-A- 0 219 284
- DE-A- 3 725 344
- GB-A- 1 590 291
- US-A- 3 047 515

## Beschreibung

Die Erfindung betrifft neuartige Titan-/Zirkonium-Katalysatoren, ein Verfahren zu ihrer Herstellung und die Verwendung der erfindungsgemäßen Katalysatoren in Veresterungsreaktionen, Umesterungsreaktionen und Polykondensationsreaktionen zur Herstellung von Estern oder Polyestern.

Polyester sind wichtige industrielle Polymeren, welche beispielsweise für die Herstellung von Fasern oder als Polyolkomponente in Polyurethan-Systemen seit vielen Jahren verwendet werden (siehe dazu G. Oertel in Polyurethane Handbook, Hanser Publishers (1994), S. 65-72). Die Herstellung der Polyester erfolgt entweder durch eine direkte Veresterung von niedermolekularen Polycarbonsäuren (z.B. Adipinsäure) mit niedermolekularen Polyalkoholen (z.B. Diethylenglykol) oder durch eine Umesterung ausgehend von Polycarbonsäurealkylestern und Polyalkoholen. Bei den angesprochenen Reaktionen wird in der Regel ein Katalysator eingesetzt, welcher zur Verkürzung der Kesselbelegungszeiten und zum Aufbau hoher Molekulargewichte dient (siehe dazu R.E. Wilfong in Journal of Polymer Science, Vol. 54 (1961), S. 385-410 und A. Fradet, E. Maréchal in Advances in Polymer Science 43, Springer Verlag (1982), S. 51-142). Viele kommerzielle Prozesse verwenden beispielsweise Mangan-, Zink-, Antimon- oder Zinn-Salze als Katalysatoren für Veresterungen, Umesterungen oder Polykondensationen. Problematisch bei einigen oben angesprochenen Metallverbindungen ist jedoch die Tendenz, unlösliche Komplexe zu bilden, welche Probleme bei der Weiterverarbeitung der Ester bzw. Polyester nach sich ziehen können. Darüber hinaus sprechen in zunehmendem Maße die physiologische Bedenklichkeit bzw. die potentiell umweltschädigende Wirkung der oben angesprochenen Verbindungsklassen gegen eine Verwendung als Katalysator.

Organische Titanverbindungen, insbesondere Titanorthoester (z.B. Titantetraisopropylat und Titantetra-n-butylat) sind ebenfalls effektive und häufig verwendete Veresterungs-, Umesterungs- und Polykondensationskatalysatoren (z.B. US-A 2,822,348). Eine generelle Anwendung dieser Titankatalysatoren wird jedoch durch verschiedene Nachteile eingeschränkt. So können organische Titanverbindungen im Reaktionsgemisch unlöslich sein (z.B. Poly(titanalkylat)), was zu einer uneinheitlichen Verteilung des Katalysators führt und seine Aktivität beeinflusst. Weiterhin sind bestimmte Titankatalysatoren hydrolyseempfindlich, wodurch die Lagerstabilität der Katalysatorsysteme beeinträchtigt wird. Außerdem können im Verlaufe der Reaktion polymere Titanverbindungen entstehen, die letztendlich zu einem trüben Reaktionsprodukt führen, welches nur durch eine aufwendige Filtration gereinigt werden kann. Darüber hinaus reagieren Titanverbindungen normalerweise mit Spuren an Verunreinigungen (z.B. Aldehyde), welche bei der Veresterung, Umesterung oder Polykondensation ebenfalls entstehen, und erzeugen auf diese Weise eine unerwünschte Gelbfärbung beim Reaktionsprodukt. Es konnte gezeigt werden, dass einer solchen unerwünschten Verfärbung durch die Verwendung von vielkomponentigen Katalysatorsystemen entgegengewirkt werden kann. So beschreibt beispielsweise das US-Patent 6,080,834 ein Katalysatorsystem aus einer Titanverbindung, einem Komplexierungsreagenz (z.B. Hydroxycarbonsäure), einer Phosphorverbindung und ggf. anderen Additiven in einem Lösungsmittel. Die Verwendung von Katalysatorsystemen aus Titanorthoestern, Alkoholen (z.B. Ethylenglykol), 2-Hydroxycarbonsäuren und Basen (z.B. Natriumhydroxid) wird in US-A 5,866,710 dargelegt. Die Herstellung solcher komplizierten Katalysatorsysteme ist offensichtlich aufwendig und daher die Anwendung in Veresterungs-, Umesterungs- und Polykondensationsreaktionen aus wirtschaftlichen Erwägungen stark benachteiligt. Es besteht darüber hinaus die Gefahr, dass die Weiterverarbeitung der Ester bzw. Polyester in verschiedenen Anwendungen (z.B. Polyurethansystemen) durch die angesprochenen Additive im Katalysatorsystem, negativ beeinflusst wird.

Auch ist der Einsatz verschiedener Derivate von Titan- und Zirkonorthoestern als Veresterungskatalysatoren bekannt:
DE-OS 37 25 344 offenbart ein durch Umsetzung von Zirkoniumtetraalkoxyderivaten mit (Poly)glykolethern und Acetylacetonat erhältliches Zirkoniumchelat, das als Katalysator zur Herstellung ungesättigter Carbonsäureester eingesetzt wird.
Aus EP-A 219 284 geht der Einsatz von hochvernetzten Polyol-Polytitanaten, hochmolekularen Polytitanaten und Polyol-Polytitanaten mit Polytitansäurestruktur als Veresterungskatalysatoren hervor.
US-A 3 047 515 schlägt den Einsatz von Reaktionsprodukten von Titanorthoestem mit niedermolekularen organischen Polyhydroxy-, Polycarboxyl-, oder Polyhydroxycarboxylverbindungen als Veresterungskatalysatoren vor.
GB 1 590 291 A lehrt die Verwendung von Reaktionsprodukten von Titanorthoestem mit aromatischen Tricarbonsäuren wie Trimellithsäure als Katalysator bei der Herstellung aromatischer Polyester.

Es besteht ein Bedarf an neuartigen Katalysatoren, welche sich durch eine möglichst einfache Zusammensetzung, eine hohe Aktivität bei Veresterungs-, Umesterungs- und/oder Polykondensationsreaktionen, eine ausreichende Löslichkeit in den Ausgangskomponenten sowie im Endprodukt, eine gute Hydrolysestabilität und durch eine physiologische Unbedenklichkeit auszeichnen. Wünschenswert ist ebenfalls, dass die erfindungsgemäßen Katalysatoren zu einem Reaktionsprodukt mit verbesserten optischen Eigenschaften (z.B. weniger unerwünschte Farbe des Polyesters) führen.

Es wurde nun überraschenderweise gefunden, dass bei Verwendung von geeigneten Ausgangsmaterialien neuartige Katalysatoren hergestellt werden können, welche sich im Vergleich zu den oben beschriebenen Katalysatoren insbesondere durch eine einfachere und damit wirtschaftlichere Zusammensetzung sowie gute Hydrolysestabilität auszeichnen. Darüber hinaus liefern die erfindungsgemäßen Katalysatoren ein Reaktionsprodukt mit verbesserten optischen Eigenschaften, d.h. weniger unerwünschter Farbe beim Ester bzw. Polyester. Andere Vorteile der erfindungsgemäßen Katalysatoren (z.B. hohe Aktivität, gute Löslichkeit in den Ausgangskomponenten bzw. im Endprodukt, physiologische Unbedenklichkeit) sind ebenfalls gegeben.

Gegenstand der vorliegenden Erfindung sind daher Katalysatoren herstellbar durch die Umsetzung von
a) Orthoestern oder kondensierten Orthoestern des Titans und/oder Zirkoniums
   mit
b) einem oder mehreren Polyalkoholen, welche mindestens zwei Hydroxylgruppen und ein zahlenmittleres Molekulargewicht von mindestens 180 g/mol aufweisen,
wobei das molare Verhältnis zwischen dem Polyalkohol b) und dem Orthoester oder kondensiertem Orthoester des Titans und/oder Zirkoniums a) mindestens 2 :1 beträgt. und wobei als Polyalkohole Polyetherpolyole, welche durch Polyaddition von Alkylenoxiden an polyfunktionelle Starterverbindungen in Gegenwart von basischen und/oder Doppelmetallcyanid-Katalysatoren hergestellt werden, und/oder Polyesterpolyole eingesetzt werden, welche aus aromatischen und/oder aliphatischen Polycarbonsäuren und mindestens zwei Hydroxylgruppen aufweisenden Polyolen hergestellt werden.

Für die Herstellung der erfindungsgemäßen Katalysatoren werden Orthoester oder kondensierte Orthoester des Titans oder Zirkoniums a) eingesetzt. In einer bevorzugten Ausfühmngsform haben die Orthoester die allgemeine Formel M(OR)₄, wobei M Titan oder Zirkonium und R gleiche oder verschiedene lineare, verzweigte oder zyklische Alkylgruppe symbolisiert. Bevorzugt hat der Alkylrest R 1 bis 6 Kohlenstoffatome. Besonders bevorzugte Orthoester sind das Titantetraisopropoxylat und das Titantetra-n-butoxylat. Die kondensierten Orthoester zur Herstellung der erfindungsgemäßen Katalysatoren werden typischerweise durch vorsichtige, partielle Hydrolyse der Titan-/Zirkoniumorthoester erhalten und unter anderem, aber nicht ausschließlich durch die allgemeine Formel R¹O[M(OR¹)₂O]ₙR¹ repräsentiert, wobei M Titan oder Zirkonium und R¹ gleiche oder verschiedene lineare, verzweigte oder zyklische Alkylgruppe symbolisiert mit n < 20, bevorzugt n < 10. Bevorzugt hat der Rest R¹ 1 bis 6 Kohlenstoffatome. Besonders bevorzugte kondensierte Orthoester sind das Poly(titanisopropoxylat) und das Poly(titanbutoxylat).

Zur Herstellung der erfindungsgemäßen Katalysatoren wird die Komponente a) mit einem oder mehreren Polyalkoholen b) umgesetzt. Erfindungsgemäß können Polyalkohole eingesetzt werden, die mindestens zwei Hydroxylgruppen und ein zahlenmittleres Molekulargewicht von mindestens 180 g/mol aufweisen, insbesondere solche Polyalkohole mit zwei bis sechs Hydroxylgruppen und einem Molekulargewicht von 180 g/mol bis 4500 g/mol.

In einer Ausführungsform handelt es sich bei den Polyalkoholen b) um Polyetherpolyole. Die erfindungsgemäß eingesetzten Polyetherpolyole können z. B. durch Polyaddition von Alkylenoxiden an polyfunktionelle Starterverbindungen in Gegenwart von Cäsium-, Rubidium-, Strontium- oder Bariumhydroxid oder alternativen basischen Katalysatoren hergestellt werden. Bevorzugt werden die erfindungsgemäß eingesetzten Polyetherpolyole mittels eines hochaktiven Doppelmetallcyanidkatalysators aus einer Starterverbindung mit durchschnittlich 2 bis 8, bevorzugt 2 bis 6, aktiven Wasserstoffatomen und einem oder mehreren Alkylenoxiden hergestellt, wie dies beispielsweise in EP-A 761 708 beschrieben ist.

Bevorzugte Starterverbindungen sind Moleküle mit mindestens zwei Hydroxylgruppen pro Molekül wie 1,2-Ethandiol, 1,2-Propandiol, 1,3-Propandiol, Diethylenglykol, Dipropylenglykol, Triethylenglykol, Tripropylenglykol, 1,2-Butandiol, 1,3-Butandiol, 1,4-Butandiol, 1,2-Hexandiol, 1,3-Hexandiol, 1,4-Hexandiol, 1,5-Hexandiol, 1,6-Hexandiol, Glycerin, Trimethylolpropan, Pentaerythrit, Sorbit und Saccharose. Weitere bevorzugte Starterverbindungen sind Ammoniak oder Verbindungen, die mindestens eine primäre oder sekundäre Aminogruppe aufweisen, wie beispielsweise aliphatische Amine, wie 1,2-Diaminoethan, Oligomere des 1,2-Diaminoethans (beispielsweise Diethylentriamin, Triethylentetramin oder Pentaethylenhexamin), 1,3-Diaminopropan, 1,3-Diaminobutan, 1,4-Diaminobutan, 1,2-Diaminohexan, 1,3-Diaminohexan, 1,4-Diaminohexan, 1,5-Diaminohexan, 1,6-Diaminohexan, aromatische Amine wie 1,2-Diaminobenzol, 1,3-Diaminobenzol, 1,4-Diaminobenzol, 2,3-Diaminotoluol, 2,4-Diaminotoluol, 3,4-Diaminotoluol, 2,5-Diaminotoluol, 2,6-Diaminotoluol, 2,2'-Diaminodiphenylmethan, 2,4'-Diaminodiphenylmethan, 4,4'-Diaminodiphenylmethan oder andere aromatische Amine, die durch säurekatalysierte Kondensierung von Anilin mit Formaldehyd erhalten werden oder Verbindungen, die neben einer primären, sekundären oder tertiären Aminogruppe eine Hydroxylgruppen aufweisen, wie beispielsweise Ethanolamin, Diethanolamin oder Triethanolamin. Die Starterverbindungen können allein oder im Gemisch verwendet werden.

Besonders bevorzugt für die Umsetzung mit einem hochaktiven Doppelmetallcyanidkatalysator sind Starterverbindungen, die z. B. durch konventionelle Alkalikatalyse aus den zuvor genannten hydroxyfunktionellen niedermolekularen Starterverbindungen und Alkylenoxiden wie Oxiran, Methyloxiran und/oder Ethyloxiran, gewonnen werden können.

Bevorzugt zur Herstellung der erfindungsgemäß eingesetzten Polyetherpolyole verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise einzubauen oder beide Verfahrensweisen nacheinander einzusetzen.

Als Polyalkohol-Komponente b) können ausschließlich oder im Gemisch mit den o.g. Polyetherpolyolen auch ein oder mehrere Polyesterpolyole aus aromatischen und/oder aliphatischen Polycarbonsäuren und mindestens zwei Hydroxylgruppen aufweisenden Polyolen eingesetzt werden. Beispiele für Dicarbonsäuren sind Phthalsäure, Isophthalsäure, Terephthalsäure, Fumarsäure, Maleinsäure, Azelainsäure, Glutarsäure, Adipinsäure, Korksäure, Sebacinsäure, Malonsäure und Bernsteinsäure. Es können die reinen Dicarbonsäuren sowie beliebige Mischungen daraus verwendet werden. Anstelle der freien Dicarbonsäuren können auch die entsprechenden Dicarbonsäurederivate, wie z. B. Dicarbonsäuremono- oder-diester von Alkoholen mit ein bis vier Kohlenstoffatomen eingesetzt werden. Es können als Carbonsäurekomponente auch Dicarbonsäureanhydride, wie Phthalsäureanhydrid oder Maleinsäureanhydrid, eingesetzt werden. Als Polyolkomponente zur Veresterung werden vorzugsweise verwendet: Ethylenglykol, Diethylenglykol, Tetraethylenglykol, 1,2-Propandiol, 1,3-Propandiol, 1,4-Butandiol, 1,5-Pentandiol, 1,6-Hexandiol, 1,10-Decandiol, Glycerin, Trimethylolpropan, Pentaerythrit oder Mischungen daraus. Es können auch Polyesterpolyole aus Lactonen, z.B. ε-Caprolacton, oder Hydroxycarbonsäuren, z.B. ω-Hydroxycarbonsäuren, verwendet werden. Der Polyalkohol kann auch Polyetheresterpolyole enthalten, wie sie z.B. durch Reaktion von Phthalsäureanhydrid mit Diethylenglykol und nachfolgende Umsetzung mit Oxiran erhältlich sind.

Die Polyalkohol-Komponente b) kann, neben dem Polyol (z.B. Polyether, Polyester) mit einer mittleren OH-Funktionalität von mindestens 2,0, auch einen oder mehrere monofunktionelle Alkohole bis zu einer Menge von 80 Gew.-% enthalten.

Zur Herstellung der erfindungsgemäßen Katalysatoren wird der Orthoester oder kondensierte Orthoester des Titans oder Zirkoniums a) mit einem oder mehreren Polyalkoholen b) umgesetzt, wobei das molare Verhältnis zwischen dem Polyalkohol und der Titan- und/oder Zirkoniumverbindung - wie erwähnt - mindestens 2:1 beträgt. Bevorzugt werden 3 mol bis 5 mol des Polyalkohols pro mol Titan- und/oder Zirkoniumverbindung verwendet. Der erfindungsgemäße Katalysator wird durch Vermischung der Komponenten a) und b) unter Entfernung von gebildeten Nebenprodukten (wie 1-Butanol, wenn es sich bei dem Orthoester beispielsweise um Titantetra-n-butylat handelt) hergestellt. In einer bevorzugten Ausführungsform wird der Polyalkohol vorgelegt, der Orthoester bzw. kondensierte Orthoester zugegeben und anschließend die gebildeten Nebenprodukte bei Temperaturen von 80°C bis 250°C, bevorzugt von 100°C bis 200°C, und ggf. vermindertem Druck abdestilliert. Der erfindungsgemäße Katalysator kann in allen gängigen Lösungsmitteln, wie Alkoholen oder Glykolen, gelöst werden. Bevorzugte Lösungsmittel sind Ethylenglykol, Diethylenglykol, Dipropylenglykol, Butandiol und/oder Hexandiol.

Ein weiterer Gegenstand der Erfindung ist daher ein Verfahren zur Herstellung der erfindungsgemäßen Katalysatoren, das dadurch gekennzeichnet ist, dass man Orthoester oder kondensierte Orthoester des Titans und/oder Zirkoniums a) mit einem oder mehreren Polyalkoholen b), welche mindestens zwei Hydroxylgruppen und ein zahlenmittleres Molekulargewicht von mindestens 180 g/mol aufweisen, wobei das molare Verhältnis zwischen dem Polyalkohol b) und dem Orthoester oder kondensierten Orthoester des Titans und/oder Zirkoniums a) mindestens 2:1 beträgt, umsetzt.

Weiterhin ist Gegenstand der Erfindung die Verwendung der erfindungsgemäßen Katalysatoren zur Herstellung von Estern oder Polyestern durch entsprechende Veresterungs-, Umesterungs- oder Polykondensationsreaktion.

Die Herstellung von Estern oder Polyestern mit den erfindungsgemäßen Katalysatoren kann - wie erwähnt - durch eine direkte Veresterung von niedermolekularen Polycarbonsäuren oder Carbonsäureanhydriden mit niedermolekularen Polyalkoholen, oder durch eine Umesterungsreaktion ausgehend von Polycarbonsäurealkylestern und Polyalkoholen erfolgen. Die direkte Veresterung und die Umesterung können ebenfalls ausgehend von Hydroxycarbonsäuren durchgeführt werden. Ein bevorzugtes Verfahren zur Herstellung von Estern oder Polyestern mittels der erfindungsgemäßen Katalysatoren erfolgt durch eine Polykondensationsreaktion.

Beispiele für niedermolekulare Polycarbonsäuren für die Herstellung von Estern und/oder Polyestern sind Phthalsäure, Isophthalsäure, Terephthalsäure, Fumarsäure, Maleinsäure, Azelainsäure, Glutarsäure, Adipinsäure, Korksäure, Sebacinsäure, Malonsäure und Bernsteinsäure. Es können die reinen Dicarbonsäuren sowie beliebige Mischungen daraus verwendet werden. Es können auch Dicarbonsäureanhydride, wie Phthalsäureanhydrid oder Maleinsäureanhydrid, eingesetzt werden. Anstelle der freien Polycarbonsäuren oder Carbonsäureanhydride können auch die entsprechenden Dicarbonsäurederivate, wie z. B. Dicarbonsäuremono- oder-diester von Alkoholen mit ein bis vier Kohlenstoffatomen eingesetzt werden. Es werden normalerweise niedrigere Homologe wie beispielsweise Methylester verwendet, da während der Reaktion der entstehende Alkohol durch Destillation abgetrennt wird. Als Polyalkoholkomponente für die Herstellung von Estern bzw. Polyestern werden vorzugsweise verwendet: Ethylenglykol, Diethylenglykol, Tetraethylenglykol, 1,2-Propandiol, 1,3-Propandiol, 1,4-Butandiol, 1,5-Pentandiol, 1,6-Hexandiol, 1,10-Decandiol, Glycerin, Trimethylolpropan, Pentaerythrit oder Mischungen daraus.

Die erfindungsgemäße Herstellung von Estern oder Polyestern durch Veresterung, Umesterung oder Polykondensation unter Verwendung der erfindungsgemäßen Katalysatoren kann in einem breiten Bereich von Reaktionsbedingungen durchgeführt werden. Bevorzugt wird in einem Temperaturintervall von 100°C bis 350°C, besonders bevorzugt 150°C bis 230°C, gearbeitet, wobei der Druck je nach Fortschritt der Reaktion zwischen 0,001 bar und Normaldruck variiert. Die Menge an zugesetztem erfindungsgemäßem Katalysator, welcher bei der Herstellung verwendet wird, hängt vom Titan- oder Zirkoniumgehalt (Ti/Zr) im Katalysator ab. Normalerweise liegt die Metallkonzentration im Bereich von 0,1 ppm bis 500 ppm, bevorzugt bei 1 ppm bis 12 ppm, bezogen auf die gesamte Masse des Reaktionsproduktes.

Bevorzugt ist die Herstellung eines Polyesterpolyols unter Verwendung von Adipinsäure und einer Mischung aus Diethylenglykol und Trimethylolpropan. Bei einer typischen diskontinuierlichen Fahrweise werden die Ausgangsstoffe im Reaktionskessel auf eine Temperatur von bis zu 200°C erhitzt und das entstehende Wasser unter Normaldruck abdestilliert. Nach Zugabe des erfindungsgemäßen Katalysators (1 bis 12 ppm Metall) wird der Druck schrittweise bis auf 15mbar reduziert. Es wird solange bei 200°C Reaktionswasser abdestilliert bis die Säurezahl ≤ 1,0 mg KOH/g beträgt. Selbstverständlich kann der Polyester zur Entfernung der Ringesteranteile in einem Kurzwegverdampfer aufgearbeitet werden (200°C/0,05 mbar).

Die erfindungsgemäßen Polyester können zur Herstellung von Polyurethanschaumstoffen, insbesondere Weichschaumstoffen, verwendet werden. Darüber hinaus können die erfindungsgemäßen Polyester selbstverständlich auch bei der Herstellung von anderen PUR - Systeme (z.B. Gießelastomere, Fasern) verwendet werden.

Der erfindungsgemäße Prozess stellt eine neue, effektive Herstellungsmethode für Ester oder Polyester dar, welche sich insbesondere durch eine exzellente Farbqualität auszeichnen.

Der Inhalt der vorliegenden Erfindung soll durch ausgewählte Beispiele erläutert werden.

### Beispiele

Folgende Abkürzungen werden in den Beispielen verwendet:

**Tabelle 1: Abkürzungen für verwendete Polyetherpolyole.**

| **Polyether** | **OH-Zahl [mg KOH/g]** | **Starterfunktionalität** | **primäre OH-Gruppen** |
|---|---|---|---|
| **PET1** | 515 | 2 | 0% |
| **PET2** | 374 | 2 | 100% |
| **PET3** | 550 | 3 | 0% |

### Herstellung der erfindunssgemäßen Katalysatoren

### Beispiel 1

Der Polyether PET1 (0,48 kg; 2,20 mol) wird in ein Reaktionsgefäß mit Destillationsbrücke eingefüllt und eine Stunde entwässert (120°C/15mbar). Anschließend wird die Vorlage auf 100°C abgekühlt, mit Stickstoff belüftet und die 0,23-fache molare Menge (bezogen auf den Polyether) an Titantetra-n-butylat (0,17 kg; 0,50 mol) zugegeben. Im Verlauf der Destillation von 1-Butanol aus dem Reaktionsgemisch wird die Temperatur langsam von 140°C auf 200°C erhöht. Wenn kein Destillat mehr übergeht, wird die Temperatur auf 160°C gesenkt und mit Hilfe einer Wasserstrahl- bzw. Ölpumpe der Druck schrittweise auf 0,5mbar vermindert, um das restliche 1-Butanol aus dem Reaktionsgemisch zu entfernen. Zur Vervollständigung der Umsetzung kann die Temperatur erneut auf 200°C erhöht werden. Man erhält eine hellgelbes Reaktionsprodukt mit einem Ti-Anteil von 5,23 % (bezogen auf das Gesamtgewicht des Katalysators) und einer Viskosität von 700 mPas (25°C).

### Beispiel 2

In Analogie zur Methode, welche in Beispiel 1 beschrieben wird, setzt man den Polyether PET1 mit einer 0,33-fachen molaren Menge an Titantetrabutylat (bezogen auf den Polyether) um. Man erhält eine hellgelbes Reaktionsprodukt mit einem Ti-Anteil von 6,85 % (bezogen auf das Gesamtgewicht des Katalysators) und einer Viskosität von 18100 mPas (25°C).

### Beispiel 3

In Analogie zur Methode, welche in Beispiel 1 beschrieben wird, werden der Polyether PET2 und eine 0,23-fache molare Menge an Titantetrabutylat (bezogen auf den Polyether) umgesetzt. Man erhält eine hellgelbes Reaktionsprodukt mit einem Ti-Anteil von 3,85 % (bezogen auf das Gesamtgewicht des Katalysators) und einer Viskosität von 6100 mPas (25°C).

### Beispiel 4

In Analogie zur Methode, welche in Beispiel 1 beschrieben wird, werden der Polyether PET3 und eine 0,25-fache molare Menge an Titantetrabutylat (bezogen auf den Polyether) umgesetzt. Man erhält eine hellgelbes Reaktionsprodukt mit einem Ti-Anteil von 3,78 % (bezogen auf das Gesamtgewicht des Katalysators) und einer Viskosität von 30200 mPas (25°C).

### Beispiel 5

In Analogie zur Methode, welche in Beispiel 1 beschrieben wird, werden Poly(ethylenadipat) mit einem mittleren Molgewicht von 440 g/mol und eine 0,25-fache molare Menge an Titantetrabutylat (bezogen auf den Polyester) umgesetzt. Man erhält ein gelbes Reaktionsprodukt mit einem Ti-Anteil von 2,66 % (bezogen auf das Gesamtgewicht des Katalysators) und einer Viskosität von 920mPas (25°C).

### Beispiel 6

In Analogie zur Methode, welche in Beispiel 1 beschrieben wird, werden der Polyether PET2 und eine 0,23-fache molare Menge an Zirkoniumtetrabutylat (bezogen auf den Polyether) umgesetzt. Man erhält eine hellgelbes, hochviskoses Reaktionsprodukt mit einem Zr-Anteil von 7,09 % (bezogen auf das Gesamtgewicht des Katalysators).

### Herstellung von Polyestern unter Verwendung der erfindungsgemäßen Katalysatoren

### Beispiele 7-15

Die Reaktionsprodukte aus den Beispielen 1 bis 6 werden für die Herstellung von Polyestern verwendet. Titantetra-n-butylat bzw. Zirkoniumtetra-n-butylat (nicht erfindungsgemäße Vergleichsbeispiele 13, 14) werden als Katalysator zum Vergleich hinzugezogen. Das Vergleichsbeispiel 15 beschreibt die Herstellung eines Polyesters ohne die Zugabe eines Katalysators.

Diethylenglykol (3,986 kg; 37,6 mol) sowie Trimethylolpropan (0,242 kg; 1,8 mol) als Polyalkohol-Komponente und Adipinsäure (5,186 kg; 35,5 mol) als Polycarbonsäure-Komponente werden in einem Reaktionskessel vorgelegt und das Reaktionsgemisch so lange unter Stickstoff auf 200°C erhitzt, bis unter Normaldruck kein Wasser mehr abdestilliert. Anschließend erfolgt die Zugabe des erfindungsgemäßen Metallkatalysators aus den Beispielen 1 bis 6, wobei die jeweilige Menge so gewählt wird, dass vergleichbare Metallkonzentrationen im Reaktionsprodukt resultieren. Im weiteren Reaktionsverlauf wird der Druck im Reaktionsgefäß schrittweise auf ca. 15 mbar reduziert, wobei zusätzliches Wasser abdestilliert. Die Polykondensationsreaktion wird so lange bei ca. 200°C fortgesetzt, bis die Säurezahl auf einen Wert ≤ 1,0 mg KOH/g gesunken ist. Die Dauer der Vakuumphase ist charakteristisch für den verwendeten Katalysator und wird als Reaktionszeit festgehalten.

**Tabelle 2: Erfindungsgemäße Beispiele 7-12; Vergleichsbeispiele 13-15.**

| **Beispiele** | **Katalysator** | **Katalysatormenge [g]** | **Reaktionszeit [Std.]** | **Säurezahl [mg KOH/g]** |
|---|---|---|---|---|
| **7** | Beispiel 1 | 1,07 | 8 | 1,0 |
| **8** | Beispiel 2 | 0,81 | 9 | 0,5 |
| **9** | Beispiel 3 | 1,47 | 8 | 0,8 |
| **10** | Beispiel 4 | 2,00 | 8 | 0,8 |
| **11** | Beispiel 5 | 2,47 | 9 | 0,5 |
| **12** | Beispiel 6 | 6,98 | 15 | 0,9 |
| **13*** | Ti(OBu)₄ | 0,40 | 8 | 0,6 |
| **14*** | Zr(OBu)₄ | 1,92 | 15 | 0,9 |
| **15*** | ohne | 0,00 | > 25 | 1,2 |

Aus Tabelle 2 geht hervor, dass die erfindungsgemäßen Titan-Katalysatoren (Beispiele 7 - 11) im Vergleich zum Titantetrabutylat (Beispiel 13) in etwa die gleiche Aktivität besitzen. Vergleichbare Kesselbelegungszeiten für die Vakuumphase werden ebenfalls für das erfindungsgemäße Beispiel 6 im Vergleich zum Zirkoniumtetrabutylat (Beispiel 14) realisiert. Erwartungsgemäß müssen lange Reaktionszeiten und ungünstige Umsätze in Kauf genommen werden, wenn auf die Verwendung von Katalysatoren verzichtet wird (Beispiel 15).

### Optische Eigenschaften der Polyester

### Beispiele 16-21

Die Katalysatoren aus den Beispielen 1-4 und 6 werden in der oben beschriebenen Weise für die Herstellung von Polyestern verwendet und die optische Qualität der Reaktionsprodukte überprüft. Titantetra-n-butylat (Vergleichsbeispiel 21) wird als gängiger Veresterungs- bzw. Umesterungskatalysator zum Vergleich hinzugezogen.

**Tabelle 3: Erfindungsgemäße Beispiele 16-20; Vergleichsbeispiel 21.**

| **Beispiele** | **Katalysator** | **Metallkonzentration [ppm]** | **Produktfarbe [Hazen]** |
|---|---|---|---|
| **16** | Beispiel 1 | 7 | 18 |
| **17** | Beispiel 2 | 7 | 24 |
| **18** | Beispiel 3 | 7 | 25 |
| **19** | Beispiel 4 | 9 | 24 |
| **20** | Beispiel 6 | 61 | 29 |
| **21*** | Ti(OBu)₄ | 7 | 47 |

Aus Tabelle 3 geht hervor, dass bei Verwendung der erfindungsgemäßen Titan-Katalysatoren (Beispiele 16 - 19) im Vergleich zum Titantetrabutylat (Beispiel 21) Polyester mit verbesserten optischen Eigenschaften, d.h. ca. halbierten Farbzahl (ca. 18-25 Hazen), erhalten werden. Eine Verringerung der Gelbfärbung des Polyesters findet man ebenfalls bei Verwendung des erfindungsgemäßen Zirkoniumkatalysators (Beispiel 6).

### Hydrolysestabilität der erfindungsgemäßen Katalysatoren

### Beispiel 22-24

Zur Überprüfung der Hydrolyseanfälligkeit werden die Katalysator-Beispiele 3 und 4 in Butandiol gelöst (40 Gew.-%) und in einem offenen Gefäß der Luftfeuchtigkeit/Sauerstoff ausgesetzt. Eine Lösung mit Titantetrabutylat wird zum Vergleich hinzugezogen (nicht erfindungsgemäßes Beispiel 24). Nach definierten Zeitintervallen wird der Grad der Hydrolyse des Katalysators bestimmt. Das Auftreten einer trüben bzw. viskosen Lösung kann hierbei als einsetzende, partielle Hydrolyse; das Auftreten eines weißen Feststoffs kann als (nahezu) vollständige Hydrolyse interpretiert werden.

**Tabelle 4: Beispiele 22-24.**

| **Beispiele** | **Katalysator** | **1 Tag** | **3 Tage** | **14 Tage** |
|---|---|---|---|---|
| **22** | Beispiel 3 | klare Lösung | klare Lösung | Trübe Lösung |
| **23** | Beispiel 4 | klare Lösung | klare Lösung | klare Lösung |
| **24** | Ti(OBu)₄ | klare Lösung | viskose Lösung | weißer Feststoff |

Aus Tabelle 4 geht hervor, dass die erfindungsgemäßen Katalysatoren (Beispiele 22, 23) im Vergleich zum Titantetrabutylat (Vergleichsbeispiel 24) eine deutlich verbesserte Stabilität gegenüber Luftfeuchtigkeit/Sauerstoff aufweisen.

Wiederholt man die Experimente bezüglich Hydrolysestabilität mit den Reinsubstanzen, d.h. ohne Lösungsmittel, so beobachtet man bereits nach 5 Stunden die komplette Hydrolyse von Titantetrabutylat. Das erfindungsgemäße Beispiel 3 bildet an der Oberfläche eine gel-artige Haut aus, was auf eine partielle Hydrolyse hinweist. Das erfindungsgemäße Beispiel 4 bleibt hingegen auch nach 5 Tagen noch unverändert stabil und kann als Katalysator mit unveränderter Aktivität (Säurezahl: 0,8 mg KOH/g nach 8 Stunden Vakuumphase) für die oben beschriebene Polykondensationsreaktion eingesetzt werden.

## Patentansprüche

1. Titan-/Zirkonium-Katalysatoren herstellbar durch die Umsetzung von
a) Orthoestern oder kondensierten Orthoestern des Titans und/oder Zirkoniums
mit
b) einem oder mehreren Polyalkoholen, welche mindestens zwei Hydroxylgruppen und ein zahlenmittleres Molekulargewicht von mindestens 180 g/mol aufweisen,
wobei das molare Verhältnis zwischen dem Polyalkohol b) und dem Orthoester oder kondensiertem Orthoester des Titans und/oder Zirkoniums a) mindestens 2:1 beträgt, und wobei
als Polyalkohole Polyetherpolyole, welche durch Polyaddition von Alkylenoxiden an polyfunktionelle Starterverbindungen in Gegenwart von basischen und/oder Doppelmetallegemid-Doppelmetalleyamid-Katalysatoren hergestellt werden und/oder
Polyesterpolyole eingesetzt werden, welche aus aromatischen und/oder aliphatischen Polycarbonsäuren und mindestens zwei Hydroxylgruppen aufweisenden Polyolen hergestellt werden.

2. Katalysatoren nach Anspruch 1, **dadurch gekennzeichnet, dass** das molare Verhältnis zwischen dem Polyalkohol b) und dem Orthoester oder kondensiertem Orthoester des Titans und/oder Zirkoniums a) 3:1 bis 5:1 beträgt.

3. Katalysatoren nach Anspruch 1, **dadurch gekennzeichnet, dass** als Orthoester des Titans und/oder Zirkoniums solche eingesetzt werden der allgemeinen Formel M(OR)₄, wobei M für Titan und/oder Zirkonium steht und R für gleiche oder verschiedene lineare, verzweigte oder zyklische Alkylgruppen steht.

4. Katalysatoren nach Anspruch 1, **dadurch gekennzeichnet, dass** Titantetraisopropoxylat und Titantetra-n-butoxylat als Orthoester eingesetzt werden.

5. Katalysatoren nach Anspruch 1, **dadurch gekennzeichnet, dass** als kondensierte Orthoester des Titans und/oder Zirkoniums solche der allgemeinen Formel R¹O[M(OR¹)₂O]ₙR¹ eingesetzt werden, wobei M für Titan und/oder Zirkonium steht, R¹ gleiche oder verschiedene lineare, verzweigte oder cyclische Alkylgruppen symbolisiert und n für <20 steht.

6. Katalysator nach Anspruch 1, **dadurch gekennzeichnet, dass** als kondensierte Orthoester Poly(titanisopropoxylat) und Poly(titanbutoxylat) eingesetzt werden.

7. Verfahren zur Herstellung der Katalysatoren nach Anspruch 1, **dadurch gekennzeichnet, dass** man
a) Orthoester oder kondensierte Orthoester des Titans und/oder Zirkoniums mit
b) einem oder mehreren Polyalkoholen, welche mindestens zwei Hydroxylgruppen und ein zahlenmittleres Molekulargewicht von mindestens 180 g/mol aufweisen,
wobei das molare Verhältnis zwischen dem Polyalkohol b) und dem Orthoester oder kondensierten Orthoester des Titans und/oder Zirkoniums a) mindestens 2:1 beträgt, umsetzt.

8. Verwendung der Katalysatoren nach Anspruch 1 zur Herstellung von Estern oder Polyestern, die wiederum zur Herstellung von PUR-Schaumstoffen eingesetzt werden können.

## Claims

1. Titanium/zirconium catalysts obtainable by reacting
a) orthoesters or condensed orthoesters of titanium and/or zirconium
with
b) one or more polyalcohols which contain at least two hydroxyl groups and have a number average molecular weight of at least 180 g/mol,
wherein the molar ratio of polyalcohol b) to orthoester or condensed orthoester of titanium and/or zirconium a) is at least 2:1, and wherein
as polyalcohols there are used polyether polyols that are prepared by polyaddition of alkylene oxides to polyfunctional starter compounds in the presence of basic and/or double metal cyanide catalysts, and/or polyester polyols that are prepared from aromatic and/or aliphatic polycarboxylic acids and polyols containing at least two hydroxyl groups.

2. Catalysts according to Claim 1, **characterised in that** the molar ratio of polyalcohol b) to orthoester or condensed orthoester of titanium and/or zirconium a) is 3:1 to 5:1.

3. Catalysts according to Claim 1, **characterised in that** the orthoesters of titanium and/or zirconium used are those of the general formula M(OR)₄, wherein M represents titanium and/or zirconium and R represents identical or different linear, branched or cyclic alkyl groups.

4. Catalysts according to Claim 1, **characterised in that** titanium tetraisopropoxylate and titanium tetra-n-butoxylate are used as orthoesters.

5. Catalysts according to Claim 1, **characterised in that** the condensed orthoesters of titanium/zirconium used are those of the general formula R¹O[M(OR¹)₂O]ₙR¹, wherein M represents titanium and/or zirconium, R¹ represents identical or different linear, branched or cyclic alkyl groups and n is <20.

6. Catalysts according to Claim 1, **characterised in that** poly(titanium isopropoxylate) and poly(titanium butoxylate) are used as condensed orthoesters.

7. A process for preparing catalysts according to Claim 1, **characterised in that**
a) orthoesters or condensed orthoesters of titanium and/or zirconium
are reacted with
b) one or more polyalcohols which contain at least two hydroxyl groups and have a number average molecular weight of at least 180 g/mol,
wherein the molar ratio of polyalcohol b) to orthoester or condensed orthoester of titanium and/or zirconium a) is 2:1.

8. Use of the catalysts according to Claim 1 to prepare esters or polyesters which in turn can be used to prepare PUR foams.

## Revendications

1. Catalyseurs titane/zirconium, pouvant être préparés par la réaction de :
a) orthoesters ou orthoesters condensés de titane et/ou de zirconium,
avec
b) un ou plusieurs polyalcools, qui présentent au moins deux radicaux hydroxyle et un poids moléculaire moyen en nombre d'au moins 180 g/mole,
où le rapport molaire entre le polyalcool b) et l'orthoester ou l'orthoester condensé du titane et/ou du zirconium a) est égal à au moins 2:1, et où
on met en oeuvre en tant que polyalcool des polyéther-polyols qui sont préparés par polyaddition d'oxydes d'alcoylène à des composés de départ polyfonctionnels en présence de catalyseurs basiques et/ou de cyanures métalliques doubles et/ou
des polyester-polyols, qui sont préparés à partir de poly(acides carboxyliques) aromatiques et/ou aliphatiques et de polyols présentant au moins deux radicaux hydroxyle.

2. Catalyseurs selon la revendication 1, **caractérisés en ce que** le rapport molaire entre le polyalcool b) et l'orthoester ou l'orthoester condensé du titane et/ou du zirconium a) se situe dans l'intervalle allant de 3:1 à 5:1.

3. Catalyseurs selon la revendication 1, **caractérisés en ce que** comme orthoester du titane et/ou du zirconium, on met en oeuvre ceux de la formule générale M(OR)₄, où M représente le titane et/ou le zirconium et R représente des radicaux alkyle linéaires, ramifiés ou cycliques, identiques ou différents.

4. Catalyseurs selon la revendication 1, **caractérisés en ce que** l'on met en oeuvre comme orthoester, le tétraisopropoxylate de titane et le tétra-n-butoxylate de titane.

5. Catalyseurs selon la revendication 1, **caractérisés en ce que** comme orthoester condensé du titane et/ou du zirconium, on met en oeuvre ceux de la formule générale R¹O[M(OR¹)₂O]ₙR¹, où M représente le titane et/ou le zirconium, R¹ symbolise des radicaux alkyle linéaires, ramifiés ou cycliques, identiques ou différents et n représente < 20.

6. Catalyseur selon la revendication 1, **caractérisé en ce que** l'on met en oeuvre comme orthoester condensé, le poly(isopropoxylate de titane) et le poly(butoxylate de titane).

7. Procédé de préparation des catalyseurs selon la revendication 1, **caractérisé en ce que** l'on fait réagir
a) des orthoesters ou des orthoesters condensés de titane et/ou de zirconium,
avec
b) un ou plusieurs polyalcools, qui présentent au moins deux radicaux hydroxyle et un poids moléculaire moyen en nombre d'au moins 180 g/mole,
où le rapport molaire entre le polyalcool b) et l'orthoester ou l'orthoester condensé du titane et/ou du zirconium a) est égal à au moins 2:1.

8. Utilisation des catalyseurs selon la revendication 1, pour la préparation d'esters ou de polyesters, qui peuvent être mis en oeuvre à nouveau, pour la préparation de mousses PUR.
